(19) **Europäisches Patentamt / European Patent Office / Office européen des brevets**

(11) **EP 3 213 951 B1**

(12) **FASCICULE DE BREVET EUROPEEN**

(45) Date de publication et mention de la délivrance du brevet:
**03.06.2020 Bulletin 2020/23**

(51) Int Cl.:
**B60K 35/00** *(2006.01)* **B60Q 1/02** *(2006.01)*

(21) Numéro de dépôt: **17157329.8**

(22) Date de dépôt: **22.02.2017**

(54) **DISPOSITIF D'ECLAIRAGE POUR VEHICULE AVEC PRESENTATION D'INFORMATION D'AIDE A LA CONDUITE**

BELEUCHTUNGSVORRICHTUNG FÜR FAHRZEUG MIT ANZEIGE VON FAHRERASSISTENZINFORMATIONEN

LIGHTING DEVICE FOR VEHICLE WITH DRIVER ASSISTANCE INFORMATION DISPLAY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.02.2016 FR 1651633**

(43) Date de publication de la demande:
**06.09.2017 Bulletin 2017/36**

(60) Demande divisionnaire:
**20171226.2**

(73) Titulaire: **Valeo Vision**
**93012 Bobigny Cedex (FR)**

(72) Inventeurs:
- **DE LAMBERTERIE, Antoine**
 **93012 Bobigny Cedex (FR)**
- **CANONNE, Thomas**
 **93012 Bobigny Cedex (FR)**
- **THIN, Guillaume**
 **93012 Bobigny Cedex (FR)**
- **LESAFFRE, Olivier-Sébastien**
 **93012 Bobigny Cedex (FR)**
- **MBATA, Samira**
 **93012 Bobigny Cedex (FR)**

(56) Documents cités:
**EP-A2- 2 562 039 EP-A2- 2 772 682**
**DE-A1-102012 025 354**

**Description**

Le domaine de la présente invention est celui des dispositifs d'éclairage pour un véhicule automobile, tel qu'un projecteur équipant le véhicule.

Un dispositif d'éclairage de véhicule selon l'état de la technique est connu du document EP 2 772 682 A2.

Les dispositifs d'éclairage pour véhicule sont classiquement utilisés pour projeter sur la route en avant du véhicule un faisceau d'éclairage qui permet au conducteur du véhicule de conduire en toute sécurité en conditions nocturnes.

Ces dispositifs d'éclairage sont conçus pour éclairer la route à une distance minimum réglementaire pour une fonction feu de route ou pour une fonction feu de croisement. Cette distance minimum, par exemple 300 mètres pour une fonction de route, entraîne des contraintes dans le faisceau lumineux, notamment dans une portion du faisceau située entre 3 et 15 mètres devant le véhicule.

En effet, pour garantir d'atteindre un éclairement minimum requis à 300 mètres, cet éclairement est souvent très important dans la portion située entre 3 et 15 mètres. Or, celle-ci est également réglementée puisque l'éclairement dans cette zone ne doit pas gêner le conducteur du véhicule, notamment en risquant de réduire l'impression de portée à grande distance du faisceau et/ou en risquant d'éblouir les usagers autre que le conducteur par reflet sur la surface de la route mouillée empruntée par le véhicule. L'éclairement dans cette portion située entre 3 et 15 mètres en avant du véhicule est ainsi limité à 12 000 candelas à -4° mesuré le long d'un axe horizontal dans un plan vertical.

Dans les dispositifs de l'art antérieur, il est courant d'atteindre cette valeur limite de 12 000 candelas entre 3 et 15 mètres pour réussir à fournir l'éclairement minimum requis à 300 mètres.

Parallèlement à cette situation, il est de plus en plus souhaité d'utiliser le faisceau d'éclairage du véhicule pour y incruster des informations d'aide à la conduite.

Or, quand la portion de faisceau située entre 3 et 15 mètres est à l'éclairement maximum toléré, il devient impossible d'incruster une image par contraste positif. Le seul moyen disponible est alors un contraste négatif, mais celui-ci n'est efficace que si l'information est délimitée par une absence de lumière dans le faisceau. Dans un tel cas, la zone où l'information s'affiche est dépourvue de lumière et tout élément de la route dans cette zone devient alors invisible pour le conducteur. Si par exemple un nid de poule déforme la route et que l'information couvre ce nid de poule, celui-ci sera invisible pour le conducteur qui ne pourra donc pas l'éviter.

Il convient donc de trouver une autre manière de rendre les informations visibles dans le faisceau tout en maintenant un niveau de sécurité pour le conducteur du véhicule.

L'invention résout ce problème technique en proposant un dispositif d'éclairage pour véhicule automobile qui offre une visibilité suffisante de la scène de route et qui peut afficher dans le faisceau des informations d'aide à la conduite que le conducteur pourra aisément détecter tout en n'altérant pas son niveau de sécurité.

Le but de la présente invention est donc de concevoir un dispositif d'éclairage de véhicule comprenant au moins un moyen d'éclairage d'une scène de route en avant du véhicule agencé pour former un premier faisceau lumineux défini par un premier éclairement, et un dispositif de génération d'un deuxième faisceau lumineux défini par un deuxième éclairement configuré pour superposer le deuxième faisceau sur le premier faisceau lumineux, dans lequel une somme du premier éclairement et du deuxième éclairement est supérieure au premier éclairement et le deuxième faisceau lumineux forme une information d'aide à la conduite, le deuxième éclairement du deuxième faisceau lumineux étant supérieur au premier éclairement du premier faisceau lumineux.

En d'autres termes, cela signifie que le deuxième faisceau présente un éclairement non nul et plus particulièrement que l'éclairement de l'information d'aide à la conduite est supérieur à l'éclairement du premier faisceau lumineux. Le premier faisceau forme ainsi un fond lumineux à l'égard de l'information qui est projetée sur au moins une partie de celui-ci. La partie du premier faisceau lumineux sur laquelle est projetée l'information est une portion limitée du premier faisceau lumineux. Plus précisément, l'information est projetée au niveau de la scène de route.

Par « information d'aide à la conduite » on entend couvrir tout type d'information attirant l'attention du conducteur. Celle-ci peut par exemple concerner la sécurité, les dangers, notamment en soulignant par exemple le bas-côté de la route empruntée par le véhicule, ou encore des informations liées à la conduite, telles qu'une vitesse ou une direction.

Une telle conception présente de nombreux avantages.

En premier lieu, elle permet d'afficher dans le faisceau lumineux une information d'aide à la conduite que le conducteur peut détecter parfaitement, puisque son contraste avec le fond la rend visible tout en gardant un éclairage suffisant pour observer la route en tant que telle, et détecter ses imperfections, notamment.

En deuxième lieu, elle homogénéise le faisceau lumineux le long de l'axe de projection entre une vision à courte distance et une vision à longue distance, ce qui donne un confort visuel qui n'avait pas encore été atteint jusqu'à ce jour. En effet, cette homogénéité limite le risque d'éblouissement que la lumière à courte distance peut générer, notamment lors de conduite sur une route mouillée. De plus, l'homogénéité du faisceau lumineux permet de donner une meilleure impression de portée du faisceau à grande distance.

Par homogénéité du faisceau ou uniformité du faisceau, on entend que l'éclairement du faisceau est constant sur une distance d'éclairage donnée projetée sur le sol de la route éclairée par le dispositif selon l'invention.

Selon différentes caractéristiques de l'invention prises seules ou en combinaison, on pourra prévoir que :

- l'éclairement du premier faisceau dans une portion de la scène de route comprise entre trois mètres et quinze mètres en avant du véhicule est compris entre 20 lux et 50 lux et sera notamment égal à 30 lux, pour cela le moyen d'éclairage peut être agencé pour que l'éclairement du premier faisceau soit constant dans cette portion de la scène de route,

- l'éclairement du deuxième faisceau dans une portion de la scène de route comprise entre trois mètres et quinze mètres en avant du véhicule est compris entre 30 lux et 150 lux,

Ces niveaux d'éclairement du premier et du deuxième faisceau permettent de distinguer l'information projetée par le deuxième faisceau sur un fond formé par le premier faisceau.

- un contraste entre le premier et le deuxième faisceau lumineux est supérieur ou égal à zéro, il peut être compris entre 0 exclu et 5, et plus spécifiquement entre 2 et 4. Ces écarts d'éclairement permettent d'assurer une meilleure lisibilité de l'information projetée sur le premier faisceau en contraste positif.

- le moyen d'éclairage et le dispositif de génération du deuxième faisceau sont formés par au moins un même ensemble comprenant au moins une source de lumière émettant un faisceau de rayons de lumière, un système de balayage recevant le faisceau de rayons de lumière et le répartissant sur une surface d'un dispositif de conversion de longueur d'onde ; ou un même ensemble comprenant au moins une source lumineuse homogène et un écran LCD ou des micros-miroirs,

Par source lumineuse homogène on entend une source lumineuse surfacique qui se distingue d'une source pixélisée en ce qu'elle n'est pas divisée en plusieurs unités de sources lumineuses. L'écran LCD comprend alors une matrice de cristaux liquides pouvant être disposée devant la source lumineuse homogène et qui permet de moduler la transmission de lumière provenant de cette source lumineuse.

- le moyen d'éclairage et le dispositif de génération du deuxième faisceau partagent au moins une même source lumineuse qui génère le premier faisceau lumineux et le deuxième faisceau lumineux, la source lumineuse est pixélisée et peut être formée par une matrice de sources lumineuses individuelles qui s'étendent dans un même plan et dont l'intensité peut être contrôlée individuellement,

- le moyen d'éclairage comprend au moins un système optique dont le plan focal est confondu avec le plan dans lequel s'étendent les sources lumineuses individuelles.

L'invention a également pour objet un projecteur de véhicule automobile comprenant un dispositif d'éclairage tel que précédemment défini.

L'invention peut également couvrir un dispositif d'éclairage de véhicule comprenant au moins un moyen d'éclairage d'une scène de route en avant du véhicule agencé pour former au moins un premier faisceau lumineux, caractérisé en ce que l'éclairement du premier faisceau est constant dans une portion de la scène de route comprise entre 3 mètres et 15 mètres en avant du véhicule, notamment le long d'un axe de déplacement du véhicule.

Ainsi l'invention permet d'assurer un fond lumineux homogène à courte distance devant le véhicule. Ce fond lumineux homogène à courte distance permet entre autre de donner une impression de plus grande portée du faisceau lumineux, ce qui permet d'apporter un meilleur confort visuel au conducteur.

Dans un tel cas, l'éclairement du premier faisceau dans la portion de la scène de route comprise entre 3 mètres et 15 mètres en avant du véhicule est compris entre 20 lux et 50 lux, et dans lequel l'éclairement du premier faisceau dans une portion de la scène de route située à entre 200 et 300 mètres en avant du véhicule est compris entre 0,5 lux et 2 lux.

D'autres caractéristiques, détails et avantages de l'invention ressortiront plus clairement à la lecture de la description donnée ci-après à titre indicatif en relation avec des dessins dans lesquels :

- la figure 1 est une vue en perspective d'un véhicule muni d'un dispositif d'éclairage selon la présente invention,

- la figure 2 est une vue schématique d'un exemple de réalisation d'une source de lumière utilisée par la présente invention,

- la figure 3 représente l'image du faisceau de lumière produit par le dispositif d'éclairage selon la présente invention projetée sur un écran situé à 25 mètres en avant du véhicule et perpendiculaire à l'axe principal du faisceau,

- la figure 4 est une vue de côté d'une route et d'un véhicule positionné sur cette route, muni d'un dispositif d'éclairage selon la présente invention,

- la figure 5 est un graphique représentant l'éclairement d'un dispositif d'éclairage selon l'art antérieur comparé à l'éclairement fourni par un dispositif d'éclairage selon l'invention, en fonction de la distance séparant le dispositif d'éclairage selon l'invention et le point d'impact au sol sur la route.

Il faut tout d'abord noter que les figures exposent l'invention de manière détaillée pour mettre en œuvre l'invention, lesdites figures pouvant bien entendu servir à mieux définir l'invention le cas échéant.

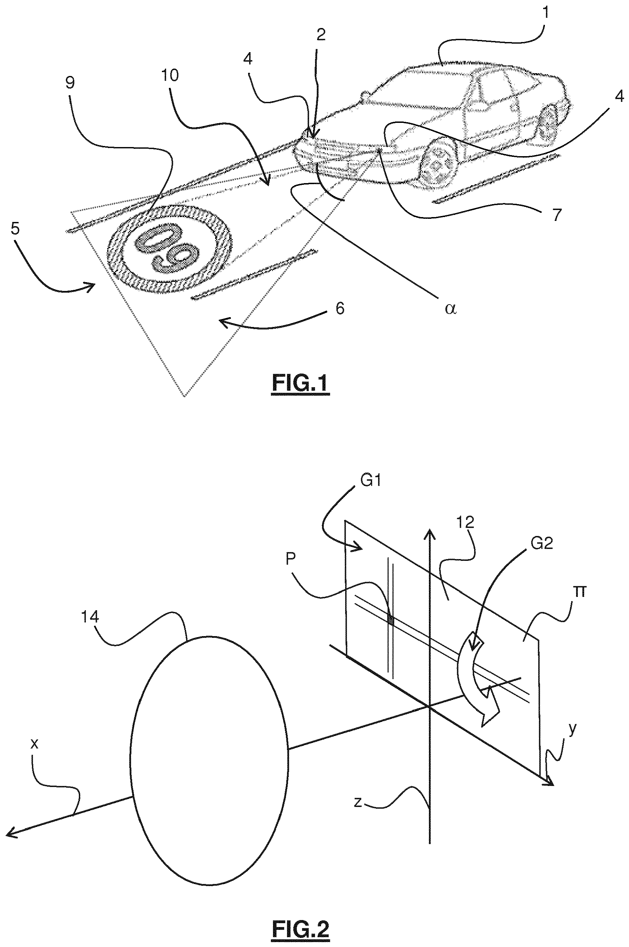

La figure 1 schématise un véhicule automobile 1 muni d'au moins un dispositif d'éclairage 2 chacun comprenant au moins un moyen d'éclairage 4 d'une scène de route 5 située en avant du véhicule 1. On définit par « avant du véhicule » la partie avant de celui-ci se situant en regard de la scène de route lors d'un déplacement du véhicule en marche avant.

Les moyens d'éclairage 4 sont agencés de manière à former un premier faisceau lumineux 6. Avantageusement, le premier faisceau 6 est réglementaire. Un faisceau est considéré comme réglementaire dès lors qu'il répond à un règlement national ou communautaire fixant une grille photométrique à respecter. À titre d'exemple pour un projecteur, le premier faisceau lumineux peut respecter les règlements européens ECE R98, ECE R112, ECE R113 ou ECE R123, dans leurs dernières modifications entrées en vigueur le 9 décembre 2015 au plus tard et/ou les règlements américains comme le « Federal Motor Vehicle Safety Standard 108» (FMVSS 108) dont la dernière modification est entrée en vigueur le 15 décembre 2015. Selon ces règlements, le premier faisceau lumineux peut notamment être un feu de route ou un feu de croisement.

Ainsi, le premier faisceau lumineux 6 présente un premier éclairement correspondant à une intensité lumineuse inférieure à 12 000 Candelas (Cd), selon un angle $\beta$ de moins quatre degrés par rapport à une droite de référence située à hauteur du projecteur. Cette droite de référence forme l'axe optique du dispositif d'éclairage 2. L'angle vertical $\beta$ s'étend dans un plan vertical passant par l'axe optique. Cet axe optique croise par exemple le ou les moyens d'éclairage 4 du véhicule 1. Selon cet angle vertical, une distance D d'au moins quinze mètres devant le véhicule est éclairée par le premier faisceau lumineux 6, lorsque le moyen d'éclairage 4 génère un feu de croisement.

Le dispositif d'éclairage 2 comprend également au moins un dispositif de génération 7 d'un deuxième faisceau lumineux 10. Ce dispositif de génération 7 du deuxième faisceau 10 est configuré pour superposer le deuxième faisceau lumineux 10 sur le premier faisceau lumineux 6. Le deuxième faisceau 10 présente un deuxième éclairement et forme une information d'aide à la conduite 9. Avantageusement, la superposition des faisceaux lumineux 6, 10 est réglementaire.

L'information d'aide à la conduite 9 concerne par exemple la vitesse du véhicule, des informations de signalisation ou encore une information de guidage du conducteur du véhicule 1. L'information d'aide à la conduite 9 présente un éclairement supérieur à l'éclairement du premier faisceau lumineux 6. Autrement dit, la somme des éclairements du premier faisceau 6 et du deuxième faisceau 10 est supérieur à l'éclairement du premier faisceau 10. Un contraste entre le fond formé par le premier faisceau lumineux 6 et l'information 9 formée par le deuxième faisceau lumineux 10 est opéré par les différentes valeurs d'éclairement généré entre le dispositif 7 de génération du deuxième faisceau 10 et le moyen d'éclairage 4.

Selon un exemple de réalisation illustré sur la figure 2, le moyen d'éclairage et le dispositif de génération du deuxième faisceau 10 partagent ici une même source lumineuse 12 qui génère à la fois le premier faisceau lumineux et le deuxième faisceau lumineux. La figure 2 montre un mode de réalisation de la source lumineuse 12 qui se présente sous la forme d'une matrice de sources lumineuses pixélisée. Cette matrice comprend une multitude de pixels P localisés dans un plan $\pi$ qui s'étend ici dans deux directions (y, z). Les pixels P sont alignés horizontalement selon l'axe y et verticalement selon l'axe z. Dans cet exemple de réalisation, un premier groupe de pixel G1 de la matrice est destiné à former le premier faisceau 6 et un deuxième groupe de pixel G2 est destiné à former le deuxième faisceau 10. Ainsi, ici le deuxième groupe de pixel G2 est assimilé au dispositif de génération 7. Selon ce mode de réalisation, chaque pixel P peut être contrôlé individuellement, en conséquence l'intensité lumineuse et l'éclairement peuvent être contrôlés en tout ou rien ou de manière linéaire.

Selon une variante de réalisation, la source lumineuse 12 peut être de type DMD acronyme anglais pour « Digital Mirror Device » où la modulation en rotation de micros-miroirs permet d'obtenir une intensité lumineuse souhaitée dans une direction donnée.

Selon une autre variante de réalisation, la source lumineuse 12 peut être de type LCD (acronyme anglais pour « Liquid Crystal Displays ») comprenant une source de lumière surfacique devant laquelle des cristaux liquide sont placés. Le mouvement des cristaux liquide autorise ou interdit le passage de lumière et forme ainsi une source lumineuse 12 pixélisée.

Selon encore un autre mode de réalisation de l'invention, la source lumineuse 12 est de type laser envoyant un faisceau de rayons de lumière vers un système de balayage qui le répartit sur la surface d'un dispositif de conversion de longueur d'onde, tel qu'une plaque comportant un luminophore.

La source lumineuse 12 peut être associée à un système optique 14 de projection de lumière sur la scène de route. Dans un mode de réalisation utilisant la matrice de pixels comme source lumineuse 12, le système optique 14 présente une zone de focalisation confondue avec le plan $\pi$ de la matrice de pixels, c'est-à-dire confondu avec la source lumineuse 12.

Lorsqu'il est possible de contrôler l'intensité lumineuse de la scène de route comme le permet le dispositif d'éclairage 2 selon l'invention, il devient également possible d'optimiser l'homogénéité de l'éclairement du premier faisceau 6 et du second faisceau 10. Par homogénéité ou uniformité du faisceau, on entend que l'éclairement du faisceau est constant sur une distance d'éclairage donnée mesurée au sol.

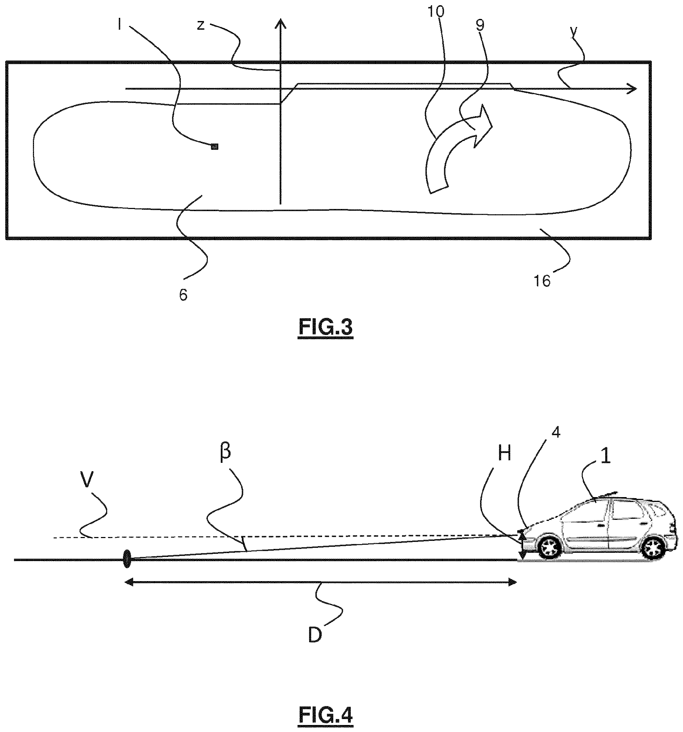

La figure 3 représente un exemple de l'image du premier faisceau lumineux 6 et du deuxième faisceau lumineux 10 issu du moyen d'éclairage 4 projetée sur un écran 16 placé perpendiculairement à l'axe optique à 25 mètres en avant du véhicule 1. Une image I du pixel de la source lumineuse présente un éclairement proportionnel à la luminance du pixel, il en est de même pour l'information 9 formée par le deuxième faisceau 10.

Le moyen d'éclairage est agencé de manière à ce que l'éclairement du premier faisceau 6 et l'éclairement du deuxième faisceau 10 soient constants dans une portion de la scène de route 5 comprise entre trois mètres et quinze mètres en avant du véhicule. L'intensité lumineuse suit la loi suivante dans une direction donnée pour chaque faisceau lumineux 6, 10 :

$$I\,(\alpha,\,\beta) = E \times D^2$$

où E correspond à l'éclairement du faisceau exprimé en Lux, D correspond à la distance séparant le moyen d'éclairage 4 et le point d'impact au sol associé à la direction $(\alpha,\,\beta)$.

De cette manière, l'intensité lumineuse permet d'assurer un éclairement uniforme du sol par le premier faisceau 6. L'éclairement du premier faisceau 6 dans une portion de la scène de route 5 comprise entre trois et quinze mètres en avant du véhicule 1 est alors compris entre 20 lux et 50 lux, ce qui correspond à une intensité lumineuse comprise entre 2000 Cd et 5000 Cd à dix mètres. De préférence, l'éclairement du premier faisceau 6 est égal à 30 lux. En outre, l'éclairement du premier faisceau 6 dans une portion de la scène de route 5 située à 300 mètres en avant du véhicule est compris entre 0,5 lux et 2 lux.

Comme cela est montré sur la figure 4, la direction $(\alpha,\,\beta)$ est définie par les angles $\alpha$ et $\beta$. L'angle horizontal $\alpha$ correspond à l'angle formé par le faisceau mesuré dans un plan horizontal par rapport à l'axe optique du faisceau. Autrement dit, l'angle $\alpha$ permet d'éclairer une portion plus ou moins large de la route. De préférence, l'angle $\alpha$ prend une valeur comprise entre -40° et 40°. L'angle vertical $\beta$ correspond à l'angle formé par le faisceau par rapport à la droite de référence V située à hauteur du projecteur, formant l'axe optique du projecteur. L'angle $\beta$ permet d'éclairer une portion de route plus ou moins éloignée du projecteur. L'angle $\beta$ peut prendre une valeur comprise entre -10° et -4°.

Le contrôle de l'intensité lumineuse du premier faisceau lumineux 6 et du deuxième faisceau lumineux 10 peut être réalisé en fonction de l'angle vertical $\beta$. En effet, comme le montre la figure 4 :

$$\tan(\beta) = H/D$$

où $\beta$ correspond à l'angle vertical comme précédemment défini, H correspond à la hauteur du projecteur sur le véhicule 1 par rapport au sol, et D correspond à la distance entre le point d'impact du premier faisceau 6 ou du second faisceau 10 sur le sol pour un angle vertical $\beta$ donné.

Ainsi, entre trois et quinze mètres devant le véhicule, la loi $I\,(\alpha,\,\beta) = E \times D^2$ devient

$$I\,(\alpha,\,\beta) = E \times (H/\tan(\beta))^2.$$

Dans ces conditions, l'éclairement au sol devient $E = I/D^2$ et correspond à une constante pour une intensité et une distance données. L'éclairement est donc homogène pour chacun des faisceaux 6, 10.

Afin de respecter les normes réglementaires, il convient de ne pas dépasser une intensité lumineuse du premier faisceau 6 de 6000 Cd maximum afin de permettre la création de l'information 9 d'aide à la conduite par le deuxième faisceau 10 en contraste positif avec un contraste compris entre 0 et 5, 0 étant exclu. La formule du contraste des contours correspond à :

(LMAX-LMIN)/LMIN

où LMAX correspond à la luminance résultante de la somme du premier faisceau 6 et du deuxième faisceau 10, et LMIN correspond à la luminance du premier faisceau 6. Autrement dit, LMAX correspond à la luminance de l'information d'aide à la conduite 9.

La luminance étant directement proportionnelle à l'intensité lumineuse, on obtient un contraste de un correspondant à un premier faisceau 6 de 6 000 Cd et un deuxième faisceau de 6000 Cd, ainsi la luminance de la somme des faisceaux 6 et 10 est égale à 12 000 Cd. Un contraste de deux correspond à un premier faisceau 6 de 4000 Cd et un deuxième faisceau 10 de 8000 Cd, ainsi la luminance de la somme des faisceaux 6 et 10 est égale à 12 000 Cd. Un contraste de trois correspond à un premier faisceau 6 de 3 000 Cd et un deuxième faisceau 10 de 9000 Cd, ainsi la luminance de la somme des faisceaux 6 et 10 est égale à 12 000 Cd. Un contraste de quatre correspond à un premier faisceau 6 de 2 400 Cd et un deuxième faisceau 10 de 9600 Cd, ainsi la luminance de la somme des faisceaux 6 et 10 est égale à 12 000 Cd. Un contraste de cinq correspond à un premier faisceau 6 de 2 000 Cd et un deuxième faisceau 10 de 10 000 Cd, ainsi la luminance de la somme des faisceaux 6 et 10 est égale à 12 000 Cd.

Ainsi, le contraste se situe entre 0 exclu et 5, et idéalement entre 2 et 4 afin d'obtenir une information 9 présentant des contours nets par rapport au premier faisceau 6. Un contraste entre 2 et 4 correspond sensiblement à une intensité du premier faisceau 6 de 4000 Cd avec une intensité du deuxième faisceau 10 entre 8000 et 9600 Cd, tout en respectant les normes réglementaires.

Ces intensités lumineuses correspondent à un éclairement du deuxième faisceau 10 dans une portion de la scène de route 5 comprise entre trois mètres et quinze mètres en avant du véhicule 1 compris entre 30 lux et 150 lux. L'éclairement du deuxième faisceau 10 peut être supérieur à l'éclairement du premier faisceau 6 ce qui permet d'avoir une information 9 particulièrement facile à distinguer tout en conservant un faisceau qui éclaire la route empruntée par le véhicule équipé de l'invention. Un tel contraste entre le fond formé par le premier faisceau lumineux 6 et l'information 9 formée par le deuxième faisceau lumineux 10 est opéré par la différence d'éclairement généré par le dispositif 7 de génération de l'information 9 et par le moyen d'éclairage 4.

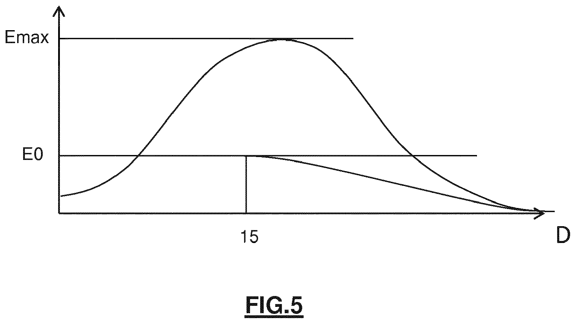

Comme le montre le graphique de la figure 5, une courbe passant par un éclairement Emax illustre l'éclairement généré par un dispositif d'éclairage de l'art antérieur. Cette courbe est en forme de cloche avec un éclairement maximum sensiblement à quinze mètres. En revanche, l'éclairement E0 généré par un dispositif d'éclairage selon l'invention est constant jusqu'à quinze mètres puis diminue progressivement pour des distances plus éloignées. Ceci permet de fournir en premier lieu un éclairement contrôlé et homogène en lumière proche, et en deuxième lieu un niveau de lumière au sol réduit, ce qui limite les effets d'éblouissement pour les usagers en cas de route mouillée. Une consommation électrique du dispositif d'éclairage est également optimisée dans le sens où il n'y a pas d'excès de lumière en des zones de la scène de route ne nécessitant pas un fort éclairage.

## Revendications

1. Dispositif d'éclairage de véhicule (1) comprenant au moins un moyen d'éclairage (4) d'une scène de route (5) en avant du véhicule (1) agencé pour former un premier faisceau lumineux (6) défini par un premier éclairement, et un dispositif (7) de génération d'un deuxième faisceau lumineux (10) défini par un deuxième éclairement configuré pour superposer le deuxième faisceau (10) sur le premier faisceau lumineux (6), dans lequel une somme du premier éclairement et du deuxième éclairement est supérieure au premier éclairement et dans lequel le deuxième éclairement du deuxième faisceau lumineux (10) est supérieur au premier éclairement du premier faisceau lumineux (6) et dans lequel le deuxième faisceau lumineux (10) forme une information d'aide à la conduite (9).

2. Dispositif selon la revendication 1, dans lequel l'éclairement du premier faisceau (6) dans une portion de la scène de route (5) comprise entre trois mètres et quinze mètres en avant du véhicule (1) est compris entre 20 lux et 50 lux.

3. Dispositif selon la revendication 1 ou 2, dans lequel l'éclairement du premier faisceau (6) est égal à 30 lux.

4. Dispositif selon l'une quelconque des revendications 1 à 3, dans lequel le moyen d'éclairage (4) est agencé pour que l'éclairement du premier faisceau (6) soit constant dans une portion de la scène de route (5) comprise entre trois mètres et quinze mètres en avant du véhicule (1).

5. Dispositif selon l'une quelconque des revendications précédentes, dans lequel un contraste entre le premier (6) et le deuxième faisceau lumineux (10) est compris entre 0 exclu et 5.

6. Dispositif selon l'une quelconque des revendications précédentes, dans lequel l'éclairement du deuxième faisceau (10) dans une portion de la scène de route (5) comprise entre trois mètres et quinze mètres en avant du véhicule (1) est compris entre 30 lux et 150 lux.

7. Dispositif selon l'une quelconque des revendications précédentes, dans lequel le moyen d'éclairage (4) et le dispositif (7) de génération du deuxième faisceau (10) partagent au moins une même source lumineuse (12) qui génère le premier faisceau lumineux (6) et le deuxième faisceau lumineux (10).

8. Dispositif selon la revendication 7, dans lequel la source lumineuse (12) est pixélisée.

9. Dispositif selon la revendication 8, dans lequel la source lumineuse (12) est formée par une matrice de sources lumineuses individuelles qui s'étendent dans un même plan ($\pi$).

10. Dispositif selon la revendication 8 ou 9, dans lequel le moyen d'éclairage (4) comprend au moins un système optique (14) dont le plan focal est confondu avec le plan ($\pi$) dans lequel s'étendent les sources lumineuses individuelles.

11. Dispositif selon l'une quelconque des revendications 8 à 10, dans lequel l'intensité lumineuse d'une pluralité de sources lumineuses peut être contrôlée individuellement.

12. Dispositif selon l'une quelconque des revendications 1 à 7, dans lequel le moyen d'éclairage (4) et le dispositif (7) de génération du deuxième faisceau (10) sont formés par au moins un même ensemble comprenant au moins une source de lumière (12) émettant un faisceau de rayons de lumière, un système de balayage recevant le faisceau de rayons de lumière et le répartissant sur une surface d'un dispositif de conversion de longueur d'onde.

13. Dispositif selon l'une quelconque des revendications 1 à 7, dans lequel le moyen d'éclairage (4) et le dispositif (7) de génération du deuxième faisceau (10) sont formés par au moins un même ensemble comprenant une source lumineuse homogène et un écran LCD.

14. Dispositif selon l'une quelconque des revendications 1 à 7, dans lequel le moyen d'éclairage (4) et le dispositif (7) du deuxième faisceau (10) sont formés par au moins un même ensemble comprenant une source lumineuse homogène et des micros-miroirs.

15. Dispositif selon l'une quelconque des revendications précédentes, dans lequel le deuxième faisceau lumineux (10) est configuré pour être superposé au premier faisceau lumineux (6) dans au moins une partie du premier faisceau lumineux (6), cette partie correspondant à une zone de la scène de route (5).

16. Projecteur de véhicule automobile (1) comprenant un dispositif d'éclairage (2) selon l'une quelconque des revendications précédentes.

## Patentansprüche

1. Beleuchtungsvorrichtung eines Fahrzeugs (1), welche umfasst: wenigstens ein Mittel zur Beleuchtung (4) eines Fahrbahnausschnitts (5) vor dem Fahrzeug (1), das dafür ausgelegt ist, ein durch eine erste Beleuchtungsstärke definiertes erstes Lichtbündel (6) zu bilden, und eine Vorrichtung (7) zur Erzeugung eines durch eine zweite Beleuchtungsstärke definierten zweiten Lichtbündels (10), die dafür ausgebildet ist, das zweite Lichtbündel (10) dem ersten Lichtbündel (6) zu überlagern, wobei eine Summe der ersten Beleuchtungsstärke und der zweiten Beleuchtungsstärke größer als die erste Beleuchtungsstärke ist und wobei die zweite Beleuchtungsstärke des zweiten Lichtbündels (10) größer als die erste Beleuchtungsstärke des ersten Lichtbündels (6) ist und wobei das zweite Lichtbündel (10) eine Fahrassistenzinformation (9) bildet.

2. Vorrichtung nach Anspruch 1, wobei die Beleuchtungsstärke des ersten Lichtbündels (6) in einem Abschnitt des Fahrbahnausschnitts (5) zwischen drei Metern und fünfzehn Metern vor dem Fahrzeug (1) zwischen 20 Lux und 50 Lux beträgt.

3. Vorrichtung nach Anspruch 1 oder 2, wobei die Beleuchtungsstärke des ersten Lichtbündels (6) 30 Lux beträgt.

4. Vorrichtung nach einem der Ansprüche 1 bis 3, wobei das Beleuchtungsmittel (4) dafür ausgelegt ist, dass die Beleuchtungsstärke des ersten Lichtbündels (6) in einem Abschnitt des Fahrbahnausschnitts (5) zwischen drei Metern und fünfzehn Metern vor dem Fahrzeug (1) konstant ist.

5. Vorrichtung nach einem der vorhergehenden Ansprüche, wobei ein Kontrast zwischen dem ersten (6) und dem zweiten Lichtbündel (10) zwischen größer als 0 und 5 beträgt.

6. Vorrichtung nach einem der vorhergehenden Ansprüche, wobei die Beleuchtungsstärke des zweiten Lichtbündels (10) in einem Abschnitt des Fahrbahnausschnitts (5) zwischen drei Metern und fünfzehn Metern vor dem Fahrzeug (1) zwischen 30 Lux und 150 Lux beträgt.

7. Vorrichtung nach einem der vorhergehenden Ansprüche, wobei das Beleuchtungsmittel (4) und die Vorrichtung (7) zur Erzeugung des zweiten Lichtbündels (10) wenigstens eine gemeinsame Lichtquelle (12) verwenden, welche das erste Lichtbündel (6) und das zweite Lichtbündel (10) erzeugt.

8. Vorrichtung nach Anspruch 7, wobei die Lichtquelle (12) eine Pixel-Lichtquelle ist.

9. Vorrichtung nach Anspruch 8, wobei die Lichtquelle (12) von einer Matrix aus einzelnen Lichtquellen gebildet wird, welche sich in derselben Ebene ($\pi$) erstrecken.

10. Vorrichtung nach Anspruch 8 oder 9, wobei das Beleuchtungsmittel (4) wenigstens ein optisches System (14) umfasst, dessen Brennebene mit der Ebene ($\pi$) zusammenfällt, in welcher sich die einzelnen Lichtquellen erstrecken.

11. Vorrichtung nach einem der Ansprüche 8 bis 10, wobei die Lichtstärke mehrerer Lichtquellen einzeln gesteuert werden kann.

12. Vorrichtung nach einem der Ansprüche 1 bis 7, wobei das Beleuchtungsmittel (4) und die Vorrichtung (7) zur Erzeugung des zweiten Lichtbündels (10) von wenigstens einer gemeinsamen Anordnung gebildet werden, die wenigstens eine Lichtquelle (12) umfasst, die ein Lichtstrahlenbündel aussendet, wobei ein Abtastsystem das Lichtstrahlenbündel empfängt und es auf einer Fläche einer Vorrichtung zur Wellenlängenumwandlung verteilt.

13. Vorrichtung nach einem der Ansprüche 1 bis 7, wobei das Beleuchtungsmittel (4) und die Vorrichtung (7) zur Erzeugung des zweiten Lichtbündels (10) von wenigstens einer gemeinsamen Anordnung gebildet werden, die eine homogene Lichtquelle und einen LCD-Bildschirm umfasst.

14. Vorrichtung nach einem der Ansprüche 1 bis 7, wobei das Beleuchtungsmittel (4) und die Vorrichtung (7) des zweiten Lichtbündels (10) von wenigstens einer gemeinsamen Anordnung gebildet werden, die eine homogene Lichtquelle und Mikrospiegel umfasst.

15. Vorrichtung nach einem der vorhergehenden Ansprüche, wobei das zweite Lichtbündel (10) dafür ausgebildet ist, dass es dem ersten Lichtbündel (6) in wenigstens einem Teil des ersten Lichtbündels (6) überlagert wird, wobei dieser Teil einem Bereich des Fahrbahnausschnitts (5) entspricht.

16. Scheinwerfer eines Kraftfahrzeugs (1), welcher eine Beleuchtungsvorrichtung (2) nach einem der vorhergehenden Ansprüche umfasst.

**Claims**

1. Lighting device of a vehicle (1) comprising at least one lighting means (4) for a road scene (5) in front of the vehicle (1), arranged to form a first light beam (6) defined by a first lighting, and a device (7) for generating a second light beam (10) defined by a second lighting configured to superimpose the second beam (10) on the first light beam (6), in which a sum of the first lighting and of the second lighting is greater than the first lighting and in which the second lighting of the second beam (10) is superior to the first lighting of the first beam (6) and in which the second light beam (10) forms driving assistance information (9).

2. Device according to Claim 1, in which the lighting of the first beam (6) in a portion of the road scene (5) lying between three meters and fifteen meters in front of the vehicle (1) lies between 20 lux and 50 lux.

3. Device according to Claim 1 or 2, in which the lighting of the first beam (6) is equal to 30 lux.

4. Device according to any one of Claims 1 to 3, in which the lighting means (4) is arranged with the lighting of the first beam (6) to be constant in a portion of the road scene (5) lying between three meters and fifteen meters in front of the vehicle (1).

5. Device according to any one the preceding claims, in which a contrast between the first (6) and the second (10) light beams lies between zero exclusive and five.

6. Device according to any one of the preceding claims, in which the lighting of the second beam (10) in a portion of the road scene (5) lying between three meters and fifteen meters in front of the vehicle (1) lies between 30 lux and 150 lux.

7. Device according to any one of the preceding claims, in which the lighting means (4) and the device (7) for generating the second beam (10) share at least one same light source (12) which generates the first light beam (6) and the second light beam (10).

8. Device according to Claim 7, in which the light source (12) is pixelated.

9. Device according to Claim 8, in which the light source (12) is formed by a matrix of individual light sources which extend in a same plane ($\pi$).

10. Device according to Claim 8 or 9, in which the lighting means (4) comprises at least one optical system (14) whose focal plane coincides with the plane ($\pi$) in which the individual light sources extend.

11. Device according to any one of Claims 8 to 10, in which the light intensity of a plurality of light sources can be controlled individually.

12. Device according to any one of Claims 1 to 7, in which the lighting means (4) and the device (7) for generating the second beam (10) are formed by at least one same assembly comprising at least one light source (12) emitting a beam of light rays, a scanning system receiving the beam of light rays and distributing it over a surface of a wavelength conversion device.

13. Device according to any one of Claims 1 to 7, in which the lighting means (4) and the device (7) for generating the second beam (10) are formed by at least one same assembly comprising a uniform light source and an LCD screen.

14. Device according to any one of Claims 1 to 7, in which the lighting means (4) and the device (7) of the second beam (10) are formed by at least one same assembly comprising a uniform light source and micro-mirrors.

15. Device according to any one of the preceding claims, in which the second light beam (10) is configured to be superimposed on the first light beam (6) in at least a part of the first light beam (6), this part corresponding to an area of the road scene (5).

16. Headlight of a motor vehicle (1) comprising a lighting device (2) according to any one of the preceding claims.

**FIG.1**

**FIG.2**

EP 3 213 951 B1

**FIG.3**

**FIG.4**

11

**FIG.5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2772682 A2